# EUROPEAN PATENT SPECIFICATION

(11) **EP 1 809 582 B1**
(45) Date of publication and mention of the grant of the patent: **28.08.2013**
(21) Application number: 05811087.5
(22) Date of filing: 27.10.2005
(51) Int. Cl.: C03C 17/34, C03C 17/36

(54) **DICHROIC MIRROR**
DICHROITISCHER SPIEGEL
MIROIR DICHROIQUE

(30) Priority: 29.10.2004 EP 04105400
(43) Date of publication of application: 25.07.2007
(73) Proprietor: FLABEG Deutschland GmbH, 90441 Nürnberg (DE)
(72) Inventor: Aumercier, Laurent,, F-67262 Sarre-Union (FR); Dreidemy, Pierre André,, F-67262 Sarre-Union (FR)
(74) Representative: Tergau & Walkenhorst
(86) International application number: PCT/EP2005/055605
(87) International publication number: WO 2006/045835

(56) References cited:
- US-A- 4 955 705
- PATENT ABSTRACTS OF JAPAN vol. 011, no. 324 (P-628), 22 October 1987 (1987-10-22) -& JP 62 108207 A (TOKAI RIKA CO LTD), 19 May 1987 (1987-05-19)
- PATENT ABSTRACTS OF JAPAN vol. 010, no. 074 (P-439), 25 March 1986 (1986-03-25) -& JP 60 212705 A (MURAKAMI KAIMEIDOU:KK), 25 October 1985 (1985-10-25)

## Description

The present invention concerns dichroic mirrors also known as optical filters. In particular, the invention relates to a rear view mirror comprising a vitreous substrate coated with a stack of interferential layers and with a metallic reflector.

Several constructions comprising a system combining a rear view mirror with a display, an emitter and/or electromagnetic sensor hidden behind the mirror surface are known. In these systems, the display / emitter or sensor operates trough the mirror while the mirror itself reflects what is expected from its function thanks to a specific coating arrangement which has simultaneously (1) the ability to reflect a significant portion of the visible spectrum and (2) can transmit a sufficient amount of the electromagnetic radiations emitted by the display / emitter and / or absorbed by the sensor.

All these systems installed on road vehicles usually exhibit a reflectance rate comprised between 35 and 55% (typically measured according to SAE J964 or equivalent procedure), and are often built with the reflecting layer(s) placed on the front surface of the mirror compared to the position of the observer. This embodiment maximizes the reflectance and the transmittance simultaneously, a quite challenging task when they both have to cover more or less same portions of the electromagnetic spectrum.

In some cases, system constructions using a reflective layer on the front surface is not advantageous and there is therefore a need for a dichroic mirror comprising a stack of interferential layers on the rear surface. US 4,955,705 and JP 62- 108 207 disclose such rear face construction mirrors. When using rear face construction, the transmittance rate is usually sacrificed on behalf of the reflectance rate. For example, when using a thin layer of chromium as reflector, it is known that the following values can be obtained :

| Reflectance* % | Transmittance* % |
|---|---|
| 58.8 | 1.4 |
| 53.7 | 5.1 |
| 45.4 | 9.4 |
| 40.8 | 12.1 |
| 35 | 15.4 |

| | |
|---|---|
| * reflectance and transmittance as measured here are according to SAE J964 procedure. They signify integrated values over the visible spectrum. | |

One can then understand that almost no light is transmitted once the reflectance exceeds 58-60%.

It has been discovered that the use of a stack of interferential layers and a suitable metallic reflector according to the invention, on the rear surface of the substrate, can enhance both the transmittance and the reflectance rates.

The object of the present invention is a vitreous substrate, having a front surface and a rear surface, coated on its rear surface with a stack of layers including, successively from the substrate,
i) one layer of a high refractive index material in the range of 1.9 to 2.8,
ii) one layer of a lower refractive index material in the range of 1.2 to 2,
iii) one layer of semiconductor or metal material having a refractive index of more than 3,
   - wherein the refractive indexes of high refractive index materials and of the low refractive index materials differ at least by 0.2, and
   - the optical thickness (geometrical thickness X refractive index) of layer i) being lower than 260 nm preferably lower than 250 nm, and the optical thickness of layer ii) being lower than 240 nm, preferably lower than 220, and
   - the coated substrate having a transmittance at 550 nm of at least 6%, preferably at least 8% and a reflectance at 550 nm greater than 45%, preferably greater than 50%.

Advantageously, the object of the invention is as disclosed in the dependent claims. The coated substrate can have a blue tint in reflection but it can also presents a neutral tint in reflection. In this case, the colorimetric Hunter values a* and b* are preferably comprises between -10 and + 10 and the purity is preferably lower than 13 %, more preferably lower than 10%.

The system is particularly interesting in prismatic interior day/night rear view mirrors. The reflector has to be behind the glass to offer a high reflectance "day position". The front surface of the glass itself, with its own refractive index, gives the low reflectance level of the commonly called "night position". Simultaneously with our invention, the transmittance is kept at sufficient level to allow the use of display / emitter and/or sensor devices placed behind the mirror.
The invention can also be used in "self dimming", sometime called "electrochromic" automatic day/night rear view mirrors where the highest possible reflectance of the mirror is required to increase the device optical range.
Such system can be applied on any suitable transparent substrate (for example glass or plastic), by all known means from the state of the art for such construction, for example dipping, pyrolitic deposition process as Chemical Vapor Deposition (CVD), or Physical Vapor Deposition (PVD) or the combination of any of these techniques.

Another interesting advantage of our constructions is to be durable so as to permit manufacturing handling without deterioration (mechanical - scratch resistance) and to have a substantial self protection against corrosion (climatic stability).

### Examples

In the following examples, rear view dichroic mirrors was formed by coating the rear face (the face opposite of the observer) of a soda-lime glass substrate with different stack of layers. The layers are deposited by magnetically enhanced vacuum sputtering deposition process. In a way commonly known by the skilled man, the glass passed through successive deposition chambers where the appropriate targets materials are bombarded under vacuum.

### Example 1 :

The coated substrate, viewed form the observer, consists in :

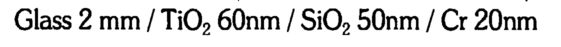

This structure gives the following optical characteristics :

| | |
|---|---|
| reflectance at 550 nm | 63% |
| transmittance at 550 nm | 6% |
| transmittance at 400 nm | 8% |
| transmittance at 700 nm | 12 % |
| transmittance at 800 nm | 15% |

Other interesting combinations exist with the same materials when their respective thickness are in the range of
Glass (0.4 to 6 mm) / TiO₂ (30 to100nm) / SiO₂ (30 to 100nm) / Cr (10 to 30nm)

### Example 2 :

The structure is similar to that of example 1, but for the reflector, Silicium is used instead of Chromium.

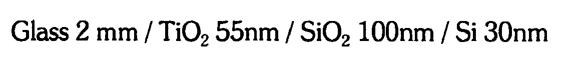

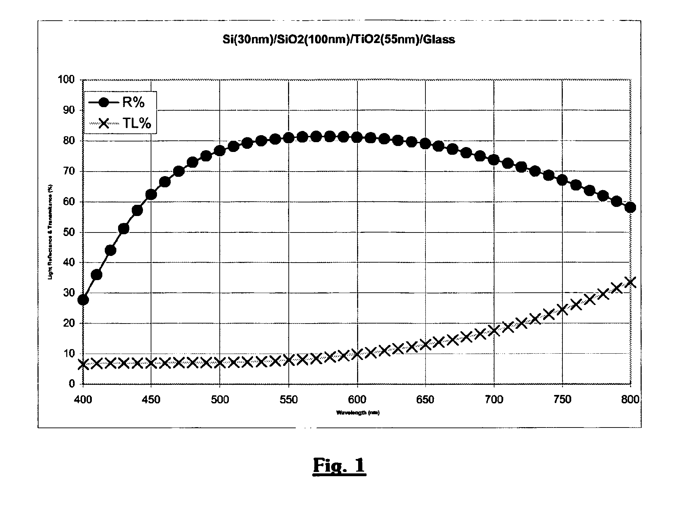

The following optical characteristics are obtained (see spectral data in fig. 1)

| | |
|---|---|
| reflectance at 550 nm | 81% |
| transmittance at 550 nm | 8 % |
| transmittance at 400 nm | 7 % |
| transmittance at 700 nm | 18 % |
| transmittance at 800 nm | 34% |

The Silicium refraction and absorption indexes over the visible and near infra red spectrum are such that a thinner layer may be used.
Simultaneously other interesting combinations also exist with the same materials when their respective thickness are in the range of
Glass (0.4 to 6 mm) / TiO₂ (55 to100nm) / SiO₂ (30 to 100nm) / Si (15 to 50nm)

### Example 3 :

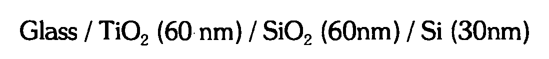

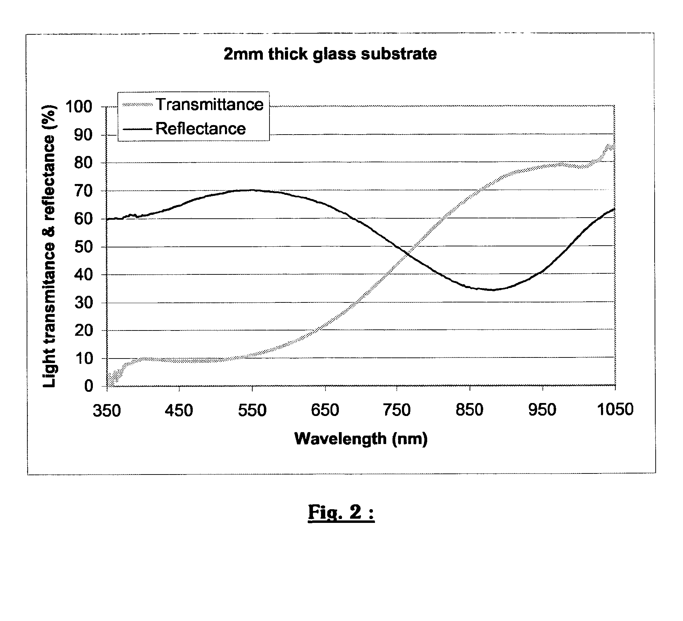

The following optical characteristics are obtained (see spectral data in fig. 2):

| | |
|---|---|
| reflectance at 550 nm | 70 % |
| transmittance at 550 nm | 12 % |
| transmittance at 400 nm | 10 % |
| transmittance at 700 nm | 31 % |
| transmittance at 800 nm | 56 % |

The coated substrate shows a neutral tint in reflection (a*=-8, b*=+9, purity is 8.5%)

### Example 4

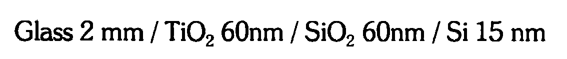

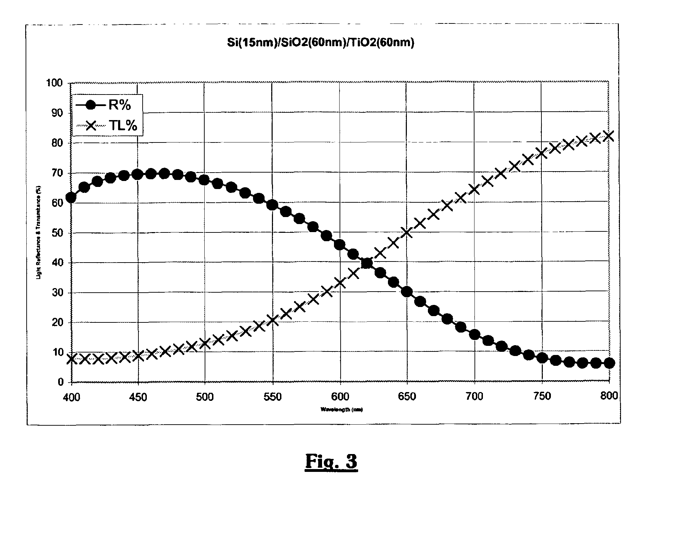

The following optical characteristics are obtained (see spectral data in fig. 3)

| | |
|---|---|
| reflectance at 550 nm | 60 % |
| transmittance at 550 nm | 20 % |
| transmittance at 400 nm | 8 % |
| transmittance at 700 nm | 64 % |
| transmittance at 800 nm | 81 % |

### Example 5

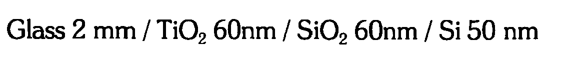

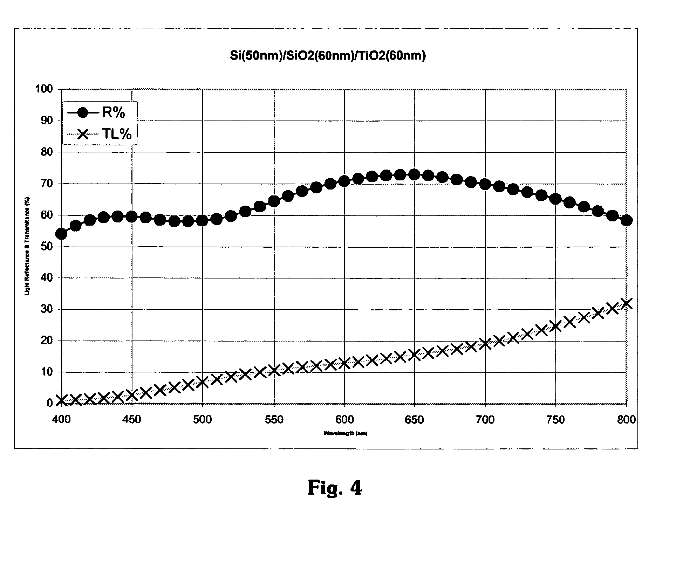

The following optical characteristics are obtained (see spectral data in fig. 4)

| | |
|---|---|
| reflectance at 550 nm | 65 % |
| transmittance at 550 nm | 11 % |
| transmittance at 400 nm | 1 % |
| transmittance at 700 nm | 19 % |
| transmittance at 800 nm | 32 % |

### Example 6

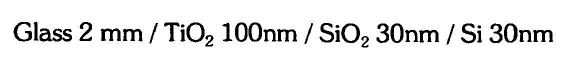

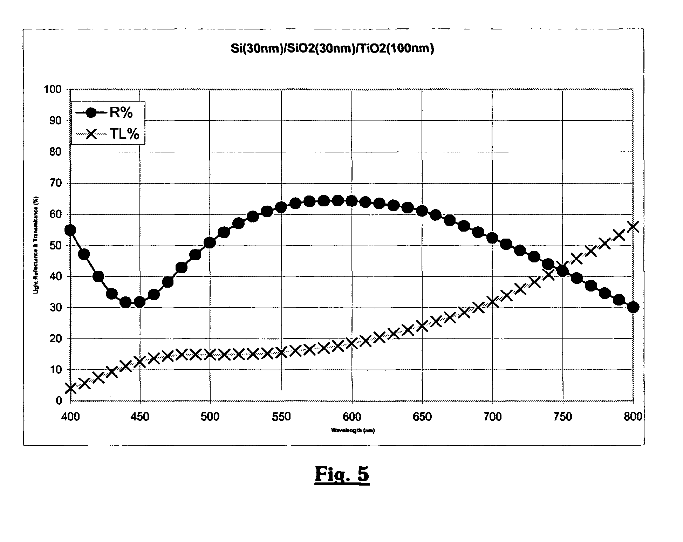

The following optical characteristics are obtained (see spectral data in fig. 5)

| | |
|---|---|
| reflectance at 550 nm | 62 % |
| transmittance at 550 nm | 16 % |
| transmittance at 400 nm | 4 % |
| transmittance at 700 nm | 32 % |
| transmittance at 800 nm | 56 % |

An alternative to above embodiments consists in the use of, instead of Silicium, Silicium doped with another metal in the amount of less than 15%.
Such mean being a classical choice in the state of the art in PVD to improve its deposition process, as long as the optical properties are not substantially affected, one can prefer to use doped Silicium, for example with 2% to 12% Aluminium combined with the Silicium, whether it is SiO2 or Si layer.

All our embodiments can receive on their uttermost rear face a coating of paint / enamel / other material, typically of a thickness above one micron to even further improve their mechanical / corrosion / anti shatter behaviour. Upon request suitable "windows" in front of display / emitter / sensor shall be placed locally.

## Claims

1. A vitreous substrate, having a front surface and a rear surface, coated on its rear surface with a stack of layers including, successively from the substrate,
i) one layer of a high refractive index material in the range of 1.9 to 2.8,
ii) one layer of a lower refractive index material in the range of 1.2 to 2,
iii) one layer of semiconductor or metal material having a refractive index of more than 3,
the refractive indexes of high refractive index materials and of the low refractive index materials differing at least by 0.2,
the optical thickness of layer i) being lower than 260 nm preferably lower than 250 nm, and the optical thickness of layer ii) being lower than 240 nm, preferably lower than 220, **characterized by**
the coated substrate having a transmittance at 550 nm of at least 6 %, preferably at least 8 % and a reflectance at 550 nm greater than 45 %, preferably greater than 50 %.

2. Coated substrate according to claim 1, **characterised in that** the optical thickness of layer i) is comprised between 85 and 240 nm, preferably comprised between 100 and 225 nm.

3. Coated substrate according to any of the preceding claims, **characterised in that** the optical thickness of layer ii) is comprised between 50 and 180 nm, preferably between 60 and 170 nm.

4. Coated substrate according to any of the preceding claims, **characterised in that** it has a transmittance at 700 nm of 38 % or less, preferably of 35 % or less and a reflectance at 700 nm of at least 43 %, preferably at least 45 %.

5. Coated substrate according to any one of the preceding claims, **characterised in that** it has a transmittance at 800 nm of 62 % or less, preferably of 60 % or less and a reflectance at 800 nm of at least 22 %, preferably at least 25 %.

6. Coated substrate according to any one of the preceding claims, **characterised in that** the semiconductor or metal material is selected from at least one of the following material: silicon, chromium, germanium, titanium, aluminium, tungsten, nickel or alloy of these material.

7. Coated substrate according to any one of the preceding claims, **characterised in that** the semiconductor material is silicon undoped or doped with 0 to 12 % Al, and is at least partially cristallised.

8. Coated substrate according to any one of the preceding claims, **characterised in that** the high refractive index material is selected amongst titanium oxide, niobium oxide, aluminium nitride and silicon nitride.

9. Coated substrate according to any one of the preceding claims, **characterised in that** the low refractive index material is selected amongst silicon oxide, magnesium fluoride, tin oxide.

10. Coated substrate according to any one of the preceding claims, **characterised in that** it has a neutral tint in reflection.

11. Coated substrate according to any one of the preceding claims, **characterised in that** the colour in reflection present a purity lower than 13 %, preferably lower than 10 %.

12. Coated substrate according to any one of the preceding claims, **characterised in that** the layer of semiconductor material has a thickness comprised between 5 and 100 nm, preferably between 10 and 75 nm.

13. Coated substrate according to any one of the preceding claims, **characterised in that** when layer iii) is a Cr layer, its geometrical thickness is comprised between 5 to 50 nm, preferably between 10 and 40 nm.

14. Coated substrate according to any one of claims 1 to 12, **characterised in that** when layer iii) is an Si layer, its geometrical thickness is comprised between 5 and 75 nm, preferably between 10 and 60 nm.

15. Coated substrate according to any of the preceding claims, **characterised in that** nature and thickness of layer iii) is chosen in way that if the substrate were coated with layer iii) alone it would have an LR measured on the non coated side of less than 50 %, preferably less than 30 %.

16. Coated substrate according to any one of the preceding claims, **characterised in that** the layer of low refractive index material has a geometrical thickness comprised between 25 and 150 nm, preferably between 30 and 120 nm.

17. Coated substrate according to any one of the preceding claims, **characterised in that** the layer of low refractive index material has a geometrical thickness comprised between 20 and 150 nm, preferably between 25 and 125 nm.

18. Use of a coated substrate according to anyone of the preceding claims in a rear view mirror.

19. Use according to claim 18, **characterized in that** the rear view mirror is a prismatic interior day/night rear view mirror.

20. Use according to claim 18 or 19, **characterized in that** the rear view mirror is an electrochromic automatic mirror.

21. Use according to anyone of claims 18 through 20, **characterized in that** a display/emitter and/or a sensor device in placed behind the mirror.

22. Rear view mirror comprising a coated substrate according to anyone of the claims 1 through 17.

## Patentansprüche

1. Glasartiges Substrat mit einer vorderen Fläche und einer hinteren Fläche, auf der hinteren Fläche beschichtet mit einem Schichtenstapel, der nacheinander vom Substrat ausgehend Folgendes umfasst:
i) eine Schicht eines Materials mit großem Lichtbrechungsindex im Bereich von 1,9 bis 2,8,
ii) eine Schicht eines Materials mit kleinerem Lichtbrechungsindex im Bereich von 1,2 bis 2,
iii) eine Schicht eines Halbleiter- oder Metallmaterials mit einem Brechungsindex von mehr als 3,
bei dem sich die Brechungsindizes der Materialien mit großem Lichtbrechungsindex und die der Materialien mit kleinem Lichtbrechungsindex um mindestens 0,2 unterscheiden,
bei dem die optische Dicke der Schicht i) geringer als 260 nm, vorzugsweise geringer als 250 nm, ist und die optische Dicke der Schicht ii) geringer als 240 nm, vorzugsweise geringer als 220 nm, ist, **dadurch gekennzeichnet, dass** das beschichtete Substrat bei 550 nm einen Transmissionsgrad von mindestens 6 %, vorzugsweise mindestens 8 %, und bei 550 nm einen Reflexionsgrad von mehr als 45 %, vorzugsweise mehr als 50 %, hat.

2. Beschichtetes Substrat gemäß Anspruch 1, **dadurch gekennzeichnet, dass** die optische Dicke der Schicht i) zwischen 85 und 240 nm, vorzugsweise zwischen 100 und 225 nm liegt.

3. Beschichtetes Substrat gemäß einem der vorherigen Ansprüche, **dadurch gekennzeichnet, dass** die optische Dicke der Schicht ii) zwischen 50 und 180 nm, vorzugsweise zwischen 60 und 170 nm liegt.

4. Beschichtetes Substrat gemäß einem der vorherigen Ansprüche, **dadurch gekennzeichnet, dass** es bei 700 nm einen Transmissionsgrad von 38 % oder weniger, vorzugsweise 35 % oder weniger, und bei 700 nm einen Reflexionsgrad von mindestens 43 %, vorzugsweise mindestens 45 %, hat.

5. Beschichtetes Substrat gemäß einem der vorherigen Ansprüche, **dadurch gekennzeichnet, dass** es bei 800 nm einen Transmissionsgrad von 62 % oder weniger, vorzugsweise 60 % oder weniger, und bei 800 nm einen Reflexionsgrad von mindestens 22 %, vorzugsweise mindestens 25 %, hat.

6. Beschichtetes Substrat gemäß einem der vorherigen Ansprüche, **dadurch gekennzeichnet, dass** das Halbleiter- oder Metallmaterial aus mindestens einem der folgenden Materialien ausgewählt ist: Silizium, Chrom, Germanium, Titan, Aluminium, Wolfram, Nickel oder einer Legierung dieser Materialien.

7. Beschichtetes Substrat gemäß einem der vorherigen Ansprüche, **dadurch gekennzeichnet, dass** das Halbleitermaterial undotiertes oder mit 0 bis 12 % Al dotiertes Silizium ist und zumindest teilweise kristallisiert ist.

8. Beschichtetes Substrat gemäß einem der vorherigen Ansprüche, **dadurch gekennzeichnet, dass** das Material mit großem Lichtbrechungsindex aus Titanoxid, Nioboxid, Aluminiumnitrid und Siliziumnitrid ausgewählt ist.

9. Beschichtetes Substrat gemäß einem der vorherigen Ansprüche, **dadurch gekennzeichnet, dass** das Material mit kleinem Lichtbrechungsindex aus Siliziumoxid, Magnesiumfluorid und Zinnoxid ausgewählt ist.

10. Beschichtetes Substrat gemäß einem der vorherigen Ansprüche, **dadurch gekennzeichnet, dass** es einen neutralen Reflexionsfarbton hat.

11. Beschichtetes Substrat gemäß einem der vorherigen Ansprüche, **dadurch gekennzeichnet, dass** die Reflexionsfarbe eine Reinheit von weniger als 13 %, vorzugsweise weniger als 10 %, hat.

12. Beschichtetes Substrat gemäß einem der vorherigen Ansprüche, **dadurch gekennzeichnet, dass** die Schicht des Halbleitermaterials eine Dicke zwischen 5 und 100 nm, vorzugsweise zwischen 10 und 75 nm, hat.

13. Beschichtetes Substrat gemäß einem der vorherigen Ansprüche, **dadurch gekennzeichnet, dass**, wenn die Schicht iii) eine Cr-Schicht ist, ihre geometrische Dicke zwischen 5 und 50 nm, vorzugsweise zwischen 10 und 40 nm, liegt.

14. Beschichtetes Substrat gemäß einem der Ansprüche 1 bis 12, **dadurch gekennzeichnet, dass**, wenn die Schicht iii) eine Si-Schicht ist, ihre geometrische Dicke zwischen 5 und 75 nm, vorzugsweise zwischen 10 und 60 nm, liegt.

15. Beschichtetes Substrat gemäß einem der vorherigen Ansprüche, **dadurch gekennzeichnet, dass** Art und Dicke der Schicht iii) so gewählt sind, dass das Substrat, wenn es mit der Schicht iii) allein beschichtet wäre, auf der nicht beschichteten Seite einen gemessenen Lichtreflexionsgrad von weniger als 50 %, vorzugsweise weniger als 30 % hätte.

16. Beschichtetes Substrat gemäß einem der vorherigen Ansprüche, **dadurch gekennzeichnet, dass** die Schicht des Materials mit kleinem Lichtbrechungsindex eine geometrische Dicke zwischen 25 und 150 nm, vorzugsweise zwischen 30 und 120 nm hat.

17. Beschichtetes Substrat gemäß einem der vorherigen Ansprüche, **dadurch gekennzeichnet, dass** die Schicht des Materials mit kleinem Lichtbrechungsindex eine geometrische Dicke zwischen 20 und 150 nm, vorzugsweise zwischen 25 und 125 nm hat.

18. Verwendung eines beschichteten Substrats gemäß einem der vorherigen Ansprüche in einem Rückspiegel.

19. Verwendung gemäß Anspruch 18, **dadurch gekennzeichnet, dass** der Rückspiegel ein prismatischer Tages-/Nacht-Innenraum-Rückspiegel ist.

20. Verwendung gemäß Anspruch 18 oder 19, **dadurch gekennzeichnet, dass** der Rückspiegel ein elektrochromer automatischer Spiegel ist.

21. Verwendung gemäß einem der Ansprüche 18 bis 20, **dadurch gekennzeichnet, dass** sich hinter dem Spiegel ein Anzeige-/Emitter- und/oder ein Sensor-Gerät befindet.

22. Rückspiegel, umfassend ein beschichtetes Substrat gemäß einem der Ansprüche 1 bis 17.

## Revendications

1. Substrat vitreux ayant une surface avant et une surface arrière, revêtu sur la surface arrière d'une pile de couches, comprenant, successivement à partir du substrat:
i) une couche d'un matériau à haut indice de réfraction dans la gamme de 1,9 à 2,8,
ii) une couche d'un matériau à indice de réfraction plus bas dans la gamme de 1,2 à 2,
iii) une couche d'un matériau semi-conducteur ou métallique avec un indice
de réfraction de plus de 3,
les indices de réfraction des matériaux à haut indice de réfraction et ceux des matériaux à bas indice de réfraction différant d'au moins 0,2,
l'épaisseur optique de la couche i) étant moins de 260 nm, de préférence moins de 250 nm, et l'épaisseur optique de la couche ii) étant moins de 240 nm, de préférence moins de 220 nm, **caractérisé en ce que**
le substrat revêtu a un facteur de transmission, à 550 nm, d'au moins 6 %, de préférence d'au moins 8 %, et une réflectivité, à 550 nm, de plus de 45 %, de préférence de plus de 50 %.

2. Substrat revêtu selon la revendication 1, **caractérisé en ce que** l'épaisseur optique de la couche i) est comprise entre 85 et 240 nm, de préférence entre 100 et 225 nm.

3. Substrat revêtu selon l'une quelconque des revendications précédentes, **caractérisé en ce que** l'épaisseur optique de la couche ii) est comprise entre 50 et 180 nm, de préférence entre 60 et 170 nm.

4. Substrat revêtu selon l'une quelconque des revendications précédentes, **caractérisé en ce qu'**il a un facteur de transmission, à 700 nm, de 38 % ou moins, de préférence de 35 % ou moins, et une réflectivité, à 700 nm, d'au moins 43 %, de préférence d'au moins 45 %.

5. Substrat revêtu selon l'une quelconque des revendications précédentes, **caractérisé en ce qu'**il a un facteur de transmission, à 800 nm, de 62 % ou moins, de préférence de 60 % ou moins, et une réflectivité, à 800 nm, d'au moins 22 %, de préférence d'au moins 25 %.

6. Substrat revêtu selon l'une quelconque des revendications précédentes, **caractérisé en ce que** le matériau semi-conducteur ou métallique est choisi entre au moins un des matériaux suivants: silicium, chrome, germanium, titane, aluminium, tungstène, nickel ou un alliage de ces matériaux.

7. Substrat revêtu selon l'une quelconque des revendications précédentes, **caractérisé en ce que** le matériau semi-conducteur est un silicium non dopé ou dopé de 0 à 12 % d'aluminium et est cristallisé au moins en partie.

8. Substrat revêtu selon l'une quelconque des revendications précédentes, **caractérisé en ce que** le matériau à haut indice de réfraction est choisi entre oxyde de titane, oxyde de niobium, nitrure d'aluminium et nitrure de silicium.

9. Substrat revêtu selon l'une quelconque des revendications précédentes, **caractérisé en ce que** le matériau à bas indice de réfraction est choisi entre oxyde de silicium, fluorure de magnesium et oxyde d'étain.

10. Substrat revêtu selon l'une quelconque des revendications précédentes, **caractérisé en ce qu'**il a une teinte de réflexion neutre.

11. Substrat revêtu selon l'une quelconque des revendications précédentes, **caractérisé en ce que** la couleur de réflexion a une pureté de moins de 13 %, de préférence de moins de 10 %.

12. Substrat revêtu selon l'une quelconque des revendications précédentes, **caractérisé en ce que** la couche du matériau semi-conducteur a une épaisseur comprise entre 5 et 100 nm, de préférence entre 10 et 75 nm.

13. Substrat revêtu selon l'une quelconque des revendications précédentes, **caractérisé en ce que**, si la couche iii) est une couche Cr, son épaisseur géométrique est comprise entre 5 et 50 nm, de préférence entre 10 et 40 nm.

14. Substrat revêtu selon l'une quelconque des revendications 1 à 12, **caractérisé en ce que**, si la couche iii) est une couche Si, son épaisseur géométrique est comprise entre 5 et 75 nm, de préférence entre 10 et 60 nm.

15. Substrat revêtu selon l'une quelconque des revendications précédentes, **caractérisé en ce que** la nature et l'épaisseur de la couche iii) sont choisies de telle sorte que le substrat, s'il serait revêtu de la couche iii) seule, aurait, sur la surface non revêtue, une réflectivité de moins de 50 %, de préférence de moins de 30 %.

16. Substrat revêtu selon l'une quelconque des revendications précédentes, **caractérisé en ce que** la couche du matériau à bas indice de réfraction a une épaisseur géométrique comprise entre 25 et 150 nm, de préférence entre 30 et 120 nm.

17. Substrat revêtu selon l'une quelconque des revendications précédentes, **caractérisé en ce que** la couche du matériau à bas indice de réfraction a une épaisseur géométrique comprise entre 20 et 150 nm, de préférence entre 25 et 125 nm.

18. Utilisation d'un substrat revêtu selon l'une quelconque des revendications précédentes dans un rétroviseur.

19. Utilisation selon la revendication 18, **caractérisé en ce que** le rétroviseur est un rétroviseur prismatique intérieur jour/nuit.

20. Utilisation selon la revendication 18 ou 19, **caractérisé en ce que** le rétroviseur est un miroir automatique électrochromique.

21. Utilisation selon l'une quelconque des revendications 18 à 20, **caractérisé en ce qu'**un dispositif affichage/émetteur et/ou un dispositif détecteur est placé derrière le miroir.

22. Rétroviseur, comprenant un substrat revêtu selon l'une quelconque des revendications 1 à 17.
